# EUROPEAN PATENT APPLICATION

(11) **EP 2 615 547 A2**
(43) Date of publication of application: **17.07.2013**
(21) Application number: 12197788.8
(22) Date of filing: 18.12.2012
(51) Int. Cl.: G06F 9/50

(54) **Simulation modelling**

(30) Priority: 13.01.2012 GB 201200498
(71) Applicant: Optimized Systems and Solutions Limited, Derby, Derbyshire DE24 8BJ (GB)
(72) Inventor: Jackson, Nigel, Malmesbury, Wiltshire SN16 9JN (GB); Soule, Paul, Bristol, South Gloucestershire BS37 7LU (GB); Wilkinson, Neil, Bath, Avon BA1 5JU (GB)
(74) Representative: Yeomans, Victoria Jane Anora

(57) **Abstract**

A method of simulation comprising selecting program elements from a library to use in a simulation model defining a network comprising the program elements and interactions therebetween. The method stores the simulation model and divides the simulation model into portions each comprising at least one program element, wherein the portions are dependent on the number of interactions for each program element. The method also runs each portion on a processing core and collating the results. The invention also includes a simulation architecture comprising a first library containing program elements, each program element comprising customisable attributes and configurable inputs and outputs. The architecture includes a second library that contains a simulation model network that defines interactions between program elements and links to selected program elements in the first library. There is a plurality of processing cores to run portions of the simulation model and a controller to allocate portions of the simulation model to each of the plurality of processing cores dependent on the number of interactions between program elements. The simulation may be for enterprise modelling.

## Description

The present invention relates to a method and an architecture to create and run simulations more efficiently. It is particularly, though not exclusively, related to simulating complex enterprises having multiple interactions between and iterations of elements.

Modelling of parts of an enterprise to simulate scenarios is known. Typically, a monolithic model is coded by an experienced programmer. The model may include pre-coded blocks or elements that are replicated in the code. To simulate multiple scenarios, the model is cloned and parameters are configured differently in each model.

One disadvantage of this method is that if one of the pre-coded blocks is changed it is necessary to find all the models into which it has been copied and update them accordingly. Another disadvantage is that the models can generally only be updated or run by an experienced programmer. Furthermore, any programmer except the original programmer is likely to lack a sufficiently deep understanding of how the model was coded to be able to easily amend or add to it.

Another disadvantage of such models is that they are large and unwieldy. This militates against modelling whole enterprises. Furthermore, because the owners of the process being modelled do not directly input into the model, there is a risk of modelling inaccuracies and poor assumptions which decrease the accuracy of the simulations.

The present invention seeks to provide a method of simulation and a simulation architecture that seeks to address the aforementioned problems.

Accordingly the present invention provides a method of simulation comprising: selecting program elements from a library to use in a simulation model; defining a network comprising the program elements and interactions therebetween; defining configuration data for each program element; storing the simulation model comprising the network, the configuration data and a link to each selected program element in the library; dividing the simulation model into portions each comprising at least one program element, wherein the portions are dependent on the number of interactions for each program element; and running each portion on a processing core and collating the results.

Advantageously, the creation of the simulation model is more efficient and the model can be maintained more easily, keeping the model relevant and avoiding significant effort to maintain legacy models. It can also be updated without extensive detailed programming knowledge. Another advantage is that the portions of the model are allocated to the processor cores at run time, based on the interactions between and iterations of program elements so the running of the simulation model is quicker and more computationally efficient.

Each program element may be agent-based, discrete event, system dynamic or a hybrid of these. The simulation may model an enterprise.

The method may further comprise, before the first step: selecting a generic program element from a library; customising attributes of the generic program element; and writing the customised program element to the library.

The step of dividing the simulation model into portions may be dynamically repeated to compensate for changes in the availability and capacity of the processing cores during the running step. Advantageously this may increase efficiency and compensate for availability and capacity problems.

Each portion may be run iteratively. For example, each may be run forty times. Each portion may be run on more than one processor core to obtain the required number of iterations.

The present invention also provides a simulation architecture comprising: a first library containing program elements, each program element comprising customisable attributes and configurable inputs and outputs; a second library containing a simulation model network that defines interactions between program elements and links to selected program elements in the first library; the second library also containing data to configure the inputs and outputs of the selected program elements; a plurality of processing cores to run portions of the simulation model wherein the portions each comprise one or more program elements and the interactions therebetween; and a controller to allocate portions of the simulation model to each of the plurality of processing cores dependent on the number of interactions between program elements.

Advantageously, the simulation architecture enables more efficient creation of the simulation model. It also creates a model that can be maintained more easily, keeping the model relevant and avoiding significant effort to maintain legacy models. The model can also be updated without extensive detailed programming knowledge. Another advantage is that the portions of the model are allocated to the processor cores based on the interactions between and iterations of program elements so the running of the simulation model is quicker and more computationally efficient.

The first library may comprise generic program elements and customised program elements, each customised program element being customised from a generic program element. The first library and the second library may be subsets of one library.

The controller may be arranged to dynamically reallocate portions of the simulation model to each of the plurality of processing cores to compensate for changes in the availability and capacity of the processing cores. Advantageously, this enables dynamic reallocation in the event that a processor core becomes unavailable through reallocation to other tasks or through faults or damage.

The simulation model may comprise an enterprise simulation model.

The present invention will be more fully described by way of example with reference to the accompanying drawings, in which:
Figure 1 is an exemplary program element in accordance with the present invention.
Figure 2 illustrates a generic program element and two customised program elements.
Figure 3 is an exemplary library of program elements in accordance with the present invention.
Figure 4 is an exemplary network in accordance with the present invention.
Figure 5 shows two simulation models in accordance with the present invention.
Figure 6 is a known distribution of a simulation model for running on a plurality of processors.
Figure 7 is an exemplary distribution of a simulation model for running on a plurality of processors in accordance with the present invention.

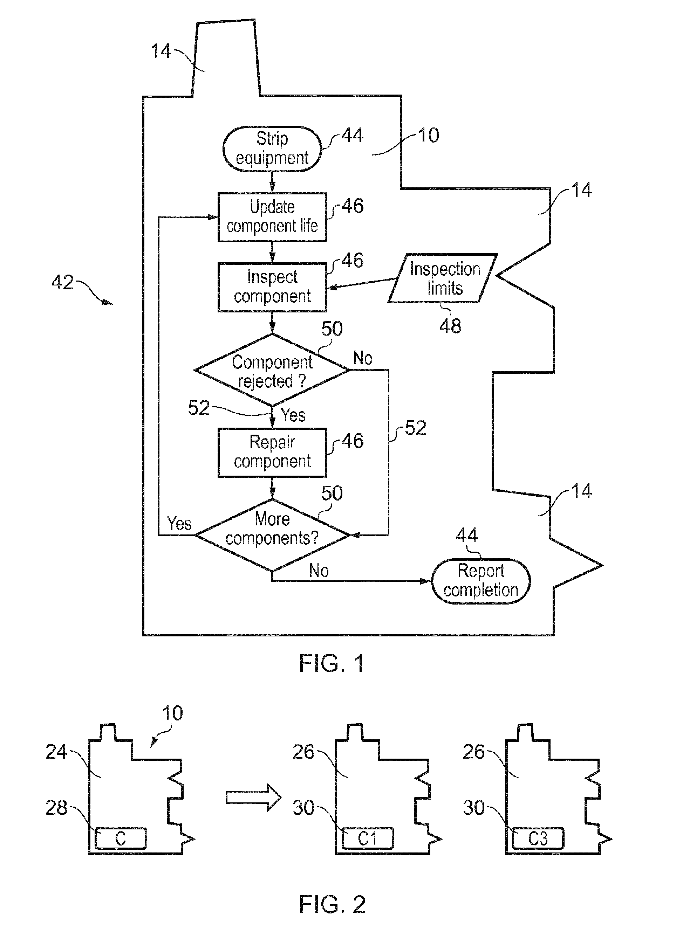

The exemplary program element 10 illustrated in Figure 1 comprises a plurality of input and/or output interfaces 14. The skilled reader will readily understand that the geometric shape of the program element 10 and the interfaces 14 is merely a graphical construct to assist explanation of the functionality of the present invention. The interfaces may be one-way, only to receive input or only to pass an output, or may be two-way, to both receive input and pass output. The program element 10 further comprises a flow chart 42 defining the tasks and processes performed by the program element 10. In this exemplary flow chart 42 one of the interfaces 14 is mapped to a task 44 called "strip equipment" which is triggered by receipt of rejected equipment. This task 44 starts the process defined by the flow chart 42. The process finishes with a task 44 called "report completion" which is mapped to another of the interfaces 14. Thus, in this example both these interfaces 14 are one-way. The flow chart 42 comprises several actions 46 to be performed by the program element 10. Some of these actions 46 require additional information such as inspection limits from an input 48. This input 48 is mapped to another of the interfaces 14, which may be two-way so that the information can be requested and then supplied. The program element 10 is able to consider information and ask questions 50, such as whether the component should be rejected on the basis of the limits, and to follow different paths 52 through the flow chart 42 as a result of the answer determined.

The skilled reader will understand that the flow chart 42 illustrated is a highly simplified example. Typically a program element 10 will encode the ability to receive and process many types of information from multiple sources, to analyse all the information as necessary and to make determinations in response thereto. The communication traffic across some interfaces 14 will be significant, for example where the program element 10 represents a designer who must create a draft drawing, consult with engineers about its feasibility, rework the drawing, consult again (and perhaps iterate these steps), produce a prototype, present to a project manager for approval and support a build process. Alternatively the program element 10 may represent a fleet planner who must establish the future availability of spare engines before deciding on suitable action (such as replace with a spare engine and schedule the engine for overhaul or do a minor repair to keep an engine on-wing when there is no spare available). The fleet planner must consult an engine operator to establish the available budget, a lease engine manager to determine if there are lease engines available, a workshop to establish their resource availability and an inventory manager to see if all parts required are in stock, or can be obtained in time. The interfaces 14 are configurable for the tasks 44 and inputs 48 mapped to them for a particular scenario to be simulated.

Each program element 10 may comprise features that are customisable. These features may be the inputs 48, tasks 44, actions 48 and questions 50 comprising the flow chart 42 or the whole flow chart 42. Figure 2 illustrates a generic program element 24 that, for example, models a machine build shop. However, this generic program element 24 may be customised to form a customised program element 26, of which two are illustrated to represent slightly differing machine build shops in two different locations or building two different machines. A customisation data block 28 is schematically shown within the generic program element 24; this customisation data block 28 is populated with different customised data 30 in each of the two customised program elements 26.

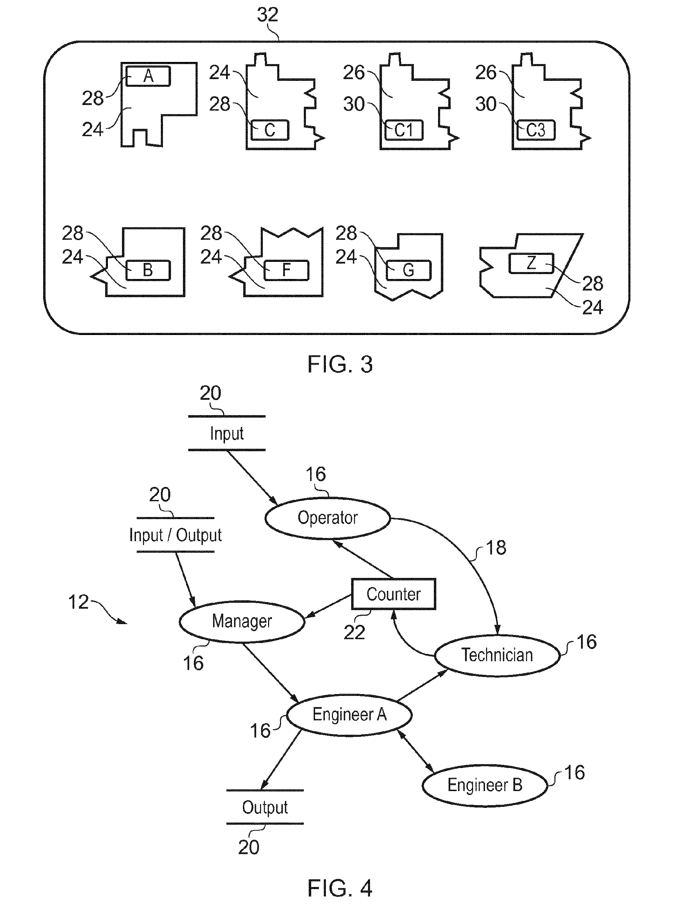

A library 32, a subset of which is shown in Figure 3, forms part of the simulation architecture of the present invention. The library 32 comprises program elements 10 including generic program elements 24 and customised program elements 26. Illustrated in Figure 3 are generic program elements A, B, C, F, G and Z, and customised program elements C1 and C3. As will be apparent from the geometrical forms shown, some program elements 10 are adapted to interface with certain other program elements 10, having a common type of interface, but not all others. For example, generic program elements A and B are not adapted to interface together but each will interface, with different interfaces, with generic program element C or customised program elements C1, C2.

The library 32 comprises at least all the program elements 10 required to build the simulation model. Additional program elements 10 can be added to the library 32, for example if there is a need to expand a simulation model or to create a new model with different features or characteristics. Where a generic program element 24 is provided, a user can access the customisation data block 28, input customised data 30 and write the newly customised program element 26 to the library 32. This customised program element 26 is then available for the user to reference in a simulation model or for later use in the same or another model. Similarly, extant program elements 10 in the library 32 may be updated by a user, to improve functionality or efficiency. The improved program element 10 is written to the library 32 to replace the original program element 10. As will become apparent, this means that each simulation model that uses that particular program element 10 will automatically be using the most up-to-date version of it and will benefit from any improvements therein. Similarly, a program element 10 in the library 32 may be copied and extended, for example by adding another interface 14, and then written back to the library 32. The program element 10 may be linked to the program element 10 from which it was derived so that changes to the original program element 10 are updated automatically in the extended program element 10.

An exemplary network 12 is illustrated in Figure 4. The network 12 is preferably agent-based, meaning that it comprises one or more agents 16 which are programmed to mimic the behaviours, interactions and actions of roles within the enterprise to be modelled. Thus the exemplary network 12 illustrated comprises an Operator, a Technician, two Engineers and a Manager, each of which is an agent 16. The network 12 also comprises network paths 18 and input and/or output parameters 20. The network paths 18 connect agents 16 to each other, to input and/or output parameters 20 and to iteration paths including counters 22, in various combinations. Each input parameter 20 is mapped to an interface 14 of the program element 10. Likewise each output parameter 20 is mapped to an interface 14 of the program element 10, which may be the same as or different to an interface 14 to which an input parameter 20 is mapped. The input/output parameter 20 is mapped to a single interface 14; the single input parameter 20 and the single output parameter 20 may be mapped to the same or different interfaces 14 as each other or the combined input/output parameter 20. Each agent 16 represents and is linked to a program element 10 in the library 32, which may be a generic program element 24 or a customised program element 26 as appropriate. The network 12 is stored in a library, either the library 32 or a different library which also forms part of the simulation architecture.

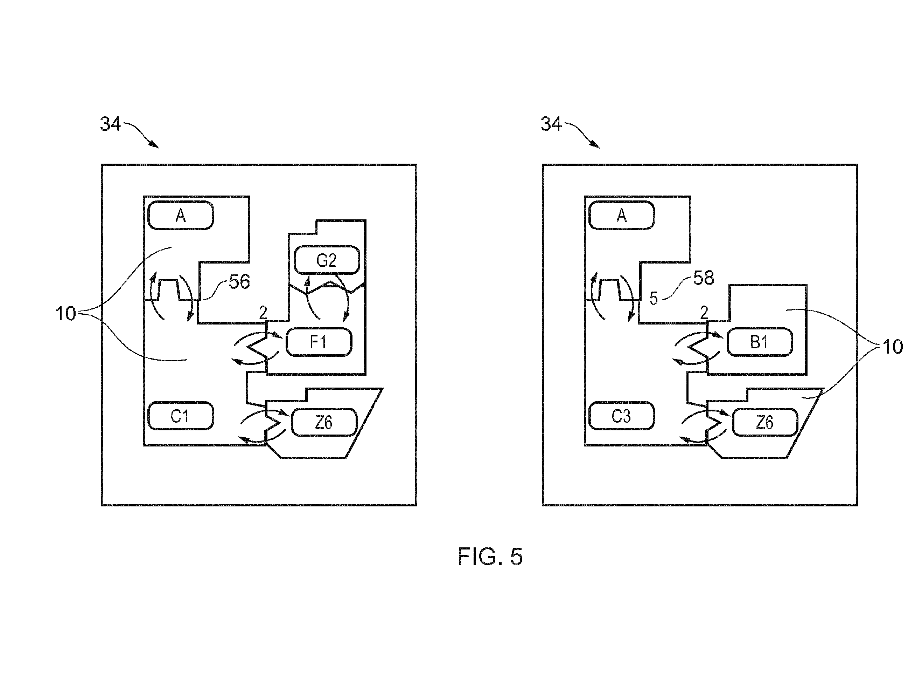

Figure 5 shows two exemplary simulation models 34 which tie together the earlier figures. Incorporated within each simulation model 34 is a definition of the network 12 of program elements 10 and the interactions and interfaces 14 therebetween, and configuration data for each program element 10. The schematic simulation models 34 illustrate this knowledge: the interactions and interfaces 14 are shown by the geometric coupling of program elements 10; the configuration data is implicit in the coupling between program elements 10 because the input and/or output parameter 20 of one program element 10 must match the input and/or output parameter 20 of the program element 10 to which it is coupled. It can be seen that each of the simulation models 34 comprises a combination of generic program elements 24 and customised program elements 26. Communication across each interface 14 is represented by arrows 56. For one-way communication only one arrow would be used. At some interfaces 14 there is communication multiple times which is represented by arrows 58 with a number of iterations beside them. Thus there are five sets of communication between program elements A and C3, two between C1 and F1 two between C3 and B1 but only one between C1 and A, C1 and Z6, F1 and G2 or C3 and Z6. Each simulation model 34 is stored in a library, either the library 32 or a different library which also forms part of the simulation architecture.

Crucially, the simulation models 34 do not replicate or import the code of each program element 10. Instead, the simulation model 34 comprises a link to the library 32, and to the selected program elements 10 in the library 32, and the configuration data to apply to each program element 10. Thus, the simulation models 34 are smaller than the known monolithic models and are guaranteed to use the current version of each program element 10. To update a program element 10 simply requires a user to update one copy, the library copy, and every simulation model 34 will immediately use the new code.

In an enterprise simulation model 34 this is particularly advantageous because it enables distribution of responsibility for program elements 10 or subsets of program elements 10. Thus, for example, a machine build shop may take responsibility for creating and maintaining a machine build shop program element 10 whereas a design office may take responsibility for creating and maintaining a program element 10 for designing and a program element 10 for validating the finished article against the design.

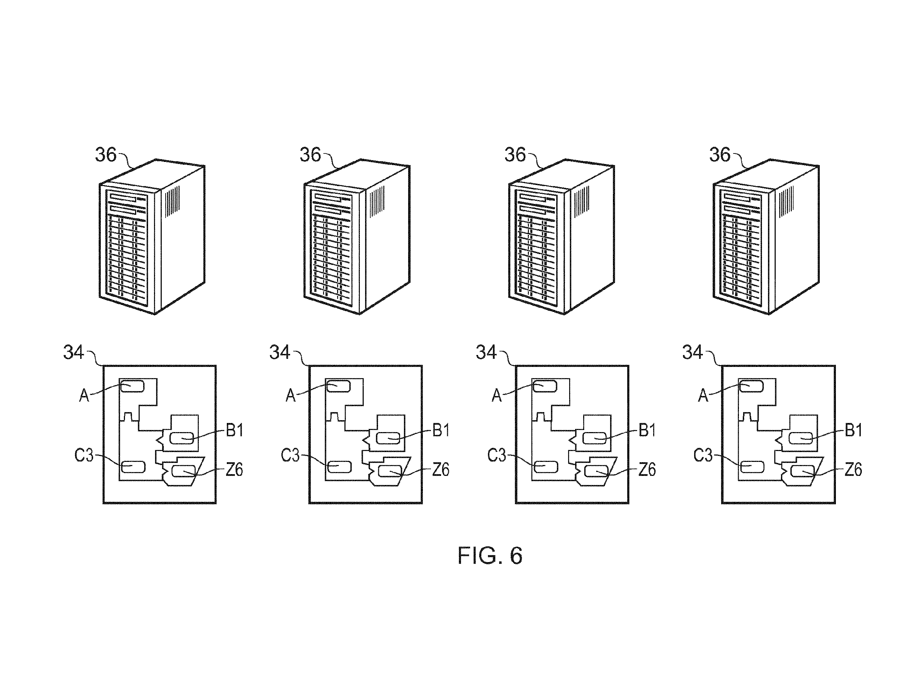

The present invention also provides efficiency gains in running simulation models 34. Figure 6 shows an example of a known method of using distributed processing to run a simulation model 34. Typically a simulation model 34 that deals with uncertainty requires several iterations within a run in order to converge on a result. The exemplary simulation model 34 must be iterated forty times to produce a final result. In this example, there are four processing cores 36 available for use to run the simulation model 34. In the known method, the simulation model 34 is distributed to each processing core 36 in parallel and is iterated ten times on each processing core 36. The results from each processing core 36 are collated to produce the final result of the simulation model 34.

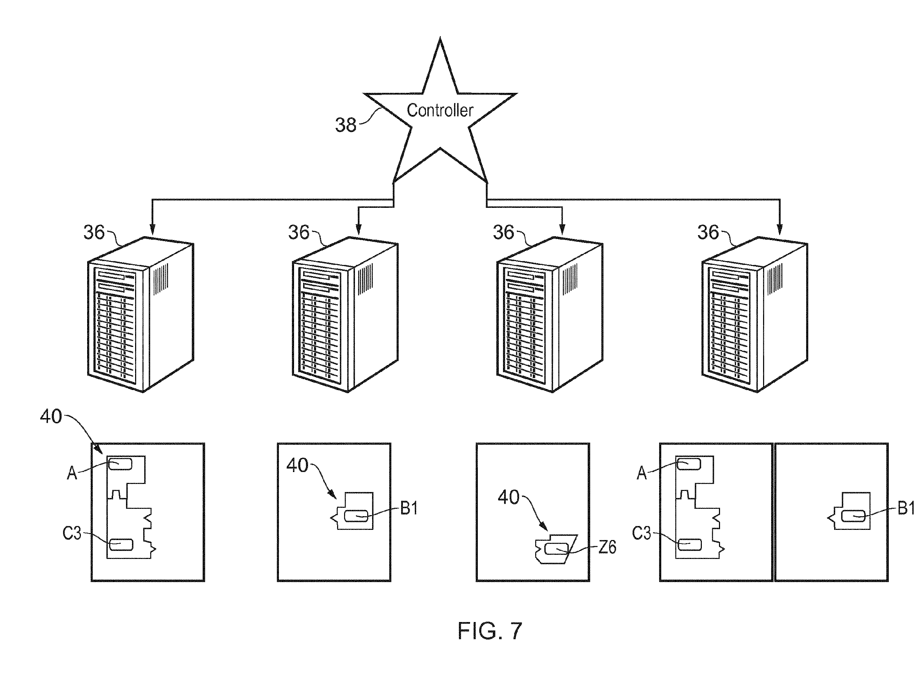

Figure 7 shows an equivalent example of part of the simulation architecture for the present invention. Again there are four processing cores 36 available and the simulation model 34 must be iterated forty times to produce the final result. However, the simulation architecture of the present invention also comprises a controller 38 to divide the simulation model 34 into portions 40. Each portion 40 comprises one or more program elements 10, their interactions and the interfaces 14 to program elements 10 that are comprised in other portions 40. The portions 40 comprise more than one program element 10 where two or more program elements 10 have extensive interactions during running because it is more computationally efficient to run these program elements 10 on a single processing core 36 than to pass data between two or more processing cores 36. For example, where program element A models design of a component and program element C models testing of a component there will be constraints passed from program element C to program element A, designs passed from program element A to program element C, test results returned to program element A, re-designs passed to program element C, etc before a final, tested design is ready to be passed to another program element 10.

The controller 38 is also arranged to assess the interactions between portions 40. It may be efficient to arrange those portions 40 that have high mutual communication density on adjacent processing cores 36 and those that have little or no communication (low communication density) on distant processing cores 36. Referring back to Figure 5, the portion 40 including program element B1 is located on the same or an adjacent processing core 36 to the portion 40 including program element C3 but the portion 40 including program element Z6 can be located more distantly.

The controller 38 then allocates portions 40 of the simulation model 34 to each processing core 36 and allocates how many iterations each is to perform. In the illustrated example, the simulation model 34 is divided into three portions 40 comprising: program elements A and C3, which have multiple interactions therebetween; program element B1; and program element Z6. The first portion is allocated to the first processing core 36 for thirty iterations and to the fourth processing core 36 for the other ten iterations. The second portion 40 is allocated to the second processing core 36 for thirty iterations and to the fourth processing core 36 for the other ten iterations. The third portion 40 is allocated to the third processing core 36 for all forty iterations. The controller 38 can allocate the portions 40 so that the load on the processing cores 36 is approximately equal. Alternatively it can asymmetrically allocate the portions 40 to compensate for differences in availability and capacity, for example where one or more of the processing cores 36 is also used for other tasks allocated by other controllers 38.

Advantageously, the controller 38 can dynamically re-allocate some or all of the portions 40 to some or all of the same or additional processing cores 36 during running of the simulation model 34. This may be required if one of the processing cores 36 becomes unexpectedly unavailable, through failure or reprioritisation. Alternatively, it may be efficient to distribute processing of the portions 40 more widely if one or more additional processing cores 36 become available so that the final result of the simulation model 34 is obtained more quickly.

Advantageously one or more user interfaces can be provided for the modelling architecture. For example, an analyst may use a graphical user interface, or another form of abstracted, high level user interface. A programmer can use a different user interface that allows him/her to access and manipulate the code directly.

Although the program elements 10 of the present invention have been described as agent-based they may alternatively be discrete event, system dynamics or a hybrid of two or more of these types.

## Claims

1. A method of simulation comprising:
- selecting program elements (10) from a first library (32) to use in a simulation model (34);
- defining a network (12) comprising the program elements (10) and interactions (14, 20) therebetween;
- defining configuration data (20) for each program element (10);
- storing the simulation model (34) comprising the network, the configuration data and a link to each selected program element in a second library (32);
- dividing the simulation model (34) into portions (40) each comprising at least one program element (10), wherein the portions (40) are dependent on the number of interactions (14, 20) for each program element (10); and
- running each portion (40) on a processing core (36) and collating the results.

2. A method as claimed in claim 1 wherein each program element (10) may be agent-based, discrete event, system dynamic or a hybrid of these.

3. A method as claimed in claim 1 or 2 wherein the simulation models an enterprise.

4. A method as claimed in any preceding claim further comprising, before the first step:
- selecting a generic program element (24) from a library;
- customising attributes of the generic program element (24); and
- writing the customised program element (26) to the library (32).

5. A method as claimed in any preceding claim wherein the step of dividing the simulation model (34) into portions (40) may be dynamically repeated to compensate for changes in the availability and capacity of the processing cores (36) during the running step.

6. A method as claimed in any preceding claim wherein each portion (40) is run iteratively.

7. A method as claimed in claim 6 wherein each portion (40) is run on more than one processor core (36) to obtain the required number of iterations.

8. A simulation architecture comprising:
- a first library (32) containing program elements (10), each program element (10) comprising customisable attributes (28) and configurable inputs and outputs (20);
- a second library (32) containing a simulation model network (12) that defines interactions (14, 20) between program elements (20) and links to selected program elements (10) in the first library (32); the second library (32) also containing data to configure the inputs and outputs of the selected program elements (10);
- a plurality of processing cores (36) to run portions (40) of the simulation model (34) wherein the portions (40) each comprise one or more program elements (10) and the interactions (14, 20) therebetween; and
- a controller (38) to allocate portions (40) of the simulation model (34) to each of the plurality of processing cores (36) dependent on the number of interactions (14, 20) between program elements (10).

9. A simulation architecture as claimed in claim 8 wherein the first library (32) comprises generic program elements (24) and customised program elements (26), each customised program element (26) being customised from a generic program element (24).

10. A simulation architecture as claimed in claim 8 or 9 wherein the first library (32) and the second library (32) are subsets of one library (32).

11. A simulation architecture as claimed in any of claims 8 to 10 wherein the controller (38) is arranged to dynamically reallocate portions (40) of the simulation model (34) to each of the plurality of processing cores (36) to compensate for changes in the availability and capacity of the processing cores (36).

12. A simulation architecture as claimed in any of claims 8 to 11 wherein the simulation model (34) comprises an enterprise simulation model.
